# EUROPEAN PATENT APPLICATION

(11) **EP 3 079 280 A1**
(43) Date of publication of application: **12.10.2016**
(21) Application number: 14875591.1
(22) Date of filing: 19.12.2014
(51) Int. Cl.: H04B 10/564

(54) **ON-CHIP OPTICAL NETWORK SYSTEM AND OPTICAL POWER CONTROL METHOD**

(30) Priority: 25.12.2013 CN 201310724541
(71) Applicant: Huawei Technologies Co., Ltd., Longgang District Shenzhen, Guangdong 518129 (CN)
(72) Inventor: LIU, Yaoda, Shenzhen Guangdong 518129 (CN); DENG, Xiangyuan, Shenzhen Guangdong 518129 (CN)
(74) Representative: Gill Jennings & Every LLP
(86) International application number: PCT/CN2014/094325
(87) International publication number: WO 2015/096663

(57) **Abstract**

The present invention discloses an on-chip optical network system and an optical power control method, where the on-chip optical network system includes a light source, an optical waveguide, a controller, an optical power divider, and a modulator; a lightwave emitted from the light source is transmitted to the optical power divider by using the optical waveguide; the optical power divider is configured to obtain a lightwave from the optical waveguide, and transmit the obtained lightwave to the modulator; the controller is configured to calculate first optical power, and control the optical power divider to obtain a lightwave whose optical power is the first optical power from the optical waveguide; and the first optical power is a sum of optical power required by the modulator and a first optical power loss generated during lightwave transmission between the optical power divider and the modulator. The system implements allocation of optical power on demand; therefore, cases of excessive optical power obtained by the modulator are reduced, and power consumption of the system is decreased.

## Description

This application claims priority to Chinese Patent No. 201310724541.4, filed with the Chinese Patent Office on December 25, 2013 and entitled "On-Chip Optical Network System And Optical Power Control Method", which is incorporated herein by reference in its entirety.

### TECHNICAL FIELD

The present invention relates to the field of the on-chip optical network technologies, and in particular, to an on-chip optical network system and an optical power control method.

### BACKGROUND

In view of a current development status of the processor industry, a current well-known method for observing the Moore's Law is to integrate increasingly more processor cores. A main problem faced by a multi-core processor is how to implement effective and quick communication among multiple processor cores. To resolve this problem, some attempts have been made in the industry and an academic circle to introduce optical interconnection to on-chip interconnection/network.

In the prior art, an on-chip optical network system may include the following components: a light source, an optical waveguide, a modulator, and the like. The light source injects, into the optical waveguide, a lightwave generated by the light source. The optical waveguide is configured to transmit the lightwave. The modulator first obtains a lightwave with a particular ratio (such as 10%) of optical power from the optical waveguide; then, the modulator modulates an electrical signal onto the obtained lightwave, to form an optical signal loaded with the electrical signal. The optical signal is subsequently transmitted to another optical network component.

However, the foregoing manner in which an optical power ratio of a lightwave obtained by a modulator is a fixed ratio value may cause excessive optical power obtained by the modulator, which further increases power consumption.

### SUMMARY

Embodiments of the present invention provide an on-chip optical network system and an optical power control method, which can decrease power consumption generated by excessive optical power obtained by a modulator.

To resolve the foregoing technical problem, the embodiments of the present invention disclose the following technical solutions:
According to a first aspect, an on-chip optical network system is provided, including: a light source, an optical waveguide, a controller, an optical power divider, and a modulator, where: a lightwave emitted from the light source is transmitted to the optical power divider by using the optical waveguide; the optical power divider is configured to obtain a lightwave from the optical waveguide, and transmit the obtained lightwave to the modulator; and the controller is configured to calculate first optical power, and control the optical power divider to obtain a lightwave whose optical power is the first optical power from the optical waveguide, where the first optical power is a sum of optical power required by the modulator and a first optical power loss generated during lightwave transmission between the optical power divider and the modulator.

With reference to the foregoing first aspect, in a first possible implementation manner, the controller is specifically configured to: emit an electrical signal to an electrode of the optical power divider by using a logic control circuit, and control an electric field between electrodes of the optical power divider, so as to control the optical power divider to obtain the lightwave whose optical power is the first optical power from the optical waveguide.

With reference to the foregoing first aspect and/or the first possible implementation manner, in a second possible implementation manner, the controller is further configured to: calculate second optical power, and control the light source to emit a lightwave whose optical power is the second optical power, where the second optical power is a sum of the first optical power and a second optical power loss generated during lightwave transmission between the light source and the optical power divider.

According to a second aspect, an optical power control method is provided, where the method is applied to an on-chip optical network system; the on-chip optical network system includes a light source, an optical waveguide, a controller, an optical power divider, and a modulator; a lightwave emitted from the light source is transmitted to the optical power divider by using the optical waveguide; the optical power divider obtains a lightwave from the optical waveguide, and transmits the obtained lightwave to the modulator; and the optical power control method includes:
calculating, by the controller, first optical power, where the first optical power is a sum of optical power required by the modulator and a first optical power loss generated during lightwave transmission between the optical power divider and the modulator; and
controlling, by the controller, the optical power divider to obtain a lightwave whose optical power is the first optical power from the optical waveguide.

With reference to the foregoing second aspect, in a first possible implementation manner, the controlling, by the controller, the optical power divider to obtain a lightwave whose optical power is the first optical power from the optical waveguide includes:
emitting, by the controller, an electrical signal to an electrode of the optical power divider by using a logic control circuit, and controlling an electric field between electrodes of the optical power divider, so as to control the optical power divider to obtain the lightwave whose optical power is the first optical power from the optical waveguide.

With reference to the foregoing second aspect and/or the first possible implementation manner, in a second possible implementation manner, after the calculating, by the controller, first optical power, the method further includes:
calculating, by the controller, second optical power, where the second optical power is a sum of the first optical power and a second optical power loss generated during lightwave transmission between the light source and the optical power divider; and
controlling, by the controller, the light source to emit a lightwave whose optical power is the second optical power.

In the embodiments of the present invention, a controller and an optical power divider are added to an on-chip optical network system. The controller controls the optical power divider to obtain a lightwave from an optical waveguide according to an optical power demand of a modulator, which implements allocation of optical power on demand, and changes an existing manner in which a lightwave is obtained according to a fixed optical power ratio. The system implements allocation of optical power on demand; therefore, cases of excessive optical power obtained by the modulator are reduced, and power consumption of the system is decreased.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an on-chip optical network system according to an embodiment of the present invention;
FIG. 2 is a schematic structural diagram of another on-chip optical network system according to an embodiment of the present invention;
FIG. 3 is a schematic structural diagram of another on-chip optical network system according to an embodiment of the present invention;
FIG. 4 is a flowchart of an optical power control method according to an embodiment of the present invention; and
FIG. 5 is a flowchart of another optical power control method according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

The following descriptions are exemplary implementation manners of the present invention. It should be noted that a person of ordinary skill in the art may make several improvements and polishing without departing from the principle of the present invention and the improvements and polishing shall fall within the protection scope of the present invention.

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

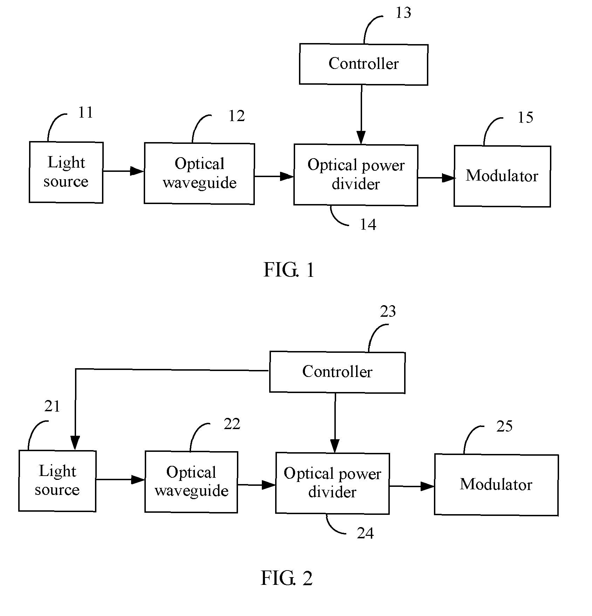

Referring to FIG. 1, FIG. 1 is a schematic structural diagram of an on-chip optical network system according to an embodiment of the present invention.

The on-chip optical network includes: a light source 11, an optical waveguide 12, a controller 13, an optical power divider 14, and a modulator 15. A lightwave emitted from the light source 11 is transmitted to the optical power divider 14 by using the optical waveguide 12; the optical power divider 14 is configured to obtain a lightwave from the optical waveguide 12, and transmit the obtained lightwave to the modulator 15. There may be multiple optical power dividers 14, and may also be multiple modulators 15, where the optical power dividers 14 and the modulators 15 are connected in a one-to-one correspondence.

The controller 13 is configured to calculate first optical power, and control the optical power divider 14 to obtain a lightwave whose optical power is the first optical power from the optical waveguide 12, where the first optical power is a sum of optical power required by the modulator 15 and a first optical power loss generated during lightwave transmission between the optical power divider 14 and the modulator 15.

The first optical power loss may be set according to an empirical value, or may be obtained by means of detection with the aid of an instrument used to measure a power loss. The optical power required by the modulator 15 may be determined at the beginning of design, and therefore may be built into the controller as logic. For example, in a simple ring topology, in a case in which a transmit node and a receive node are given, optical power required by the transmit node can be calculated at the beginning of chip design of the controller. For another example, in a case in which a two-dimensional mesh topology and a routing decision for a particular clock period are given, and a transmit node and a receive node are given, optical power required by the transmit node may be calculated according to the routing decision. The foregoing transmit node may be a modulator, and the receive node may be a component that receives an optical signal transmitted by the modulator.

After obtaining the first optical power loss, the controller 13 calculates a sum of the optical power required by the modulator 15 and the first optical power loss, uses the sum as the first optical power, and uses the first optical power as optical power of a lightwave that the optical power divider 14 needs to obtain from the optical waveguide 12.

After obtaining the first optical power by means of calculation, the controller 13 may further calculate a power allocation ratio of the lightwave that the optical power divider 14 needs to obtain. Subsequently, the optical power divider 14 obtains, according to the power allocation ratio, the lightwave whose optical power is the first optical power from the optical waveguide 12. The power allocation ratio may be a ratio of the first optical power to total power of the lightwave that is transmitted to the optical power divider 14. The total power of the lightwave that is transmitted to the optical power divider 14 is not total power of the lightwave that is output by the light source 11. Because an optical power loss is generated during transmission performed by the optical waveguide, the total power of the lightwave that is transmitted to the optical power divider 14 gradually decreases as a transmission distance from the light source 11 to the optical power divider 14 increases. The total power of the lightwave that is transmitted to the optical power divider 14 may be set by using an empirical value, or may be measured by using an instrument used to measure power.

After obtaining the first optical power or further obtaining the power allocation ratio, the controller 13 sends a control signal to the optical power divider 14, so as to control the optical power divider 14 to obtain the lightwave whose optical power is the first optical power from the optical waveguide 12.

Specifically, the controller 13 may emit an electrical signal to an electrode of the optical power divider 14 by using a logic control circuit, and control an electric field between electrodes of the optical power divider 14, so as to change a refractive index of a material between the two electrodes of the optical power divider 14, and further control the optical power divider 14 to obtain the lightwave whose optical power is the first optical power from the optical waveguide 12. The controller 13 may implement multiple control methods, which are not limited to the foregoing control of the electrodes of the optical power divider 14 by using the logic control circuit.

In this embodiment of the present invention, a controller and an optical power divider are added to an on-chip optical network system. The controller controls the optical power divider to obtain a lightwave from an optical waveguide according to an optical power demand of a modulator, which implements allocation of optical power on demand, and changes an existing manner in which a lightwave is obtained according to a fixed optical power ratio. The system implements allocation of optical power on demand; therefore, cases of excessive optical power obtained by the modulator are reduced, and power consumption of the system is decreased.

In another embodiment of the present invention, as shown in FIG. 2, an on-chip optical network system includes: a light source 21, an optical waveguide 22, a controller 23, an optical power divider 24, and a modulator 25. The on-chip optical network system is similar to the on-chip optical network system in the foregoing embodiment, and a difference lies in that, in this embodiment, the controller 23 is further configured to calculate second optical power, and control the light source 21 to emit a lightwave whose optical power is the second optical power, where the second optical power is a sum of first optical power and a second optical power loss generated during lightwave transmission between the light source 21 and the optical power divider 24. The first optical power is a sum of optical power required by the modulator 25 and a first optical power loss generated during lightwave transmission between the optical power divider 24 and the modulator 25.

The controller 23 first obtains an optical power loss that is generated during transmission of the lightwave by the optical waveguide 22, and marks the optical power loss as the second optical power loss, where the second optical power loss may be set according to an empirical value, or may be measured by using an instrument used to measure power. After obtaining the second optical power loss, the controller 23 can obtain the second optical power, that is, total power of the lightwave that needs to be emitted from the light source, by calculating a sum of the first optical power and the second optical power loss.

The controller 23 may implement, in a manner such as controlling an electric current of the light source 21, control of optical power that is output by the light source 21, so that the light source 21 emits the lightwave whose optical power is the second optical power.

In this embodiment, total power that is output by a light source is controlled according to optical power required by components in an on-chip optical network system, which decreases, to a maximum extent, optical power of a lightwave that the light source needs to emit. This not only decreases power consumption of the light source, but also decreases heat generated by the light source.

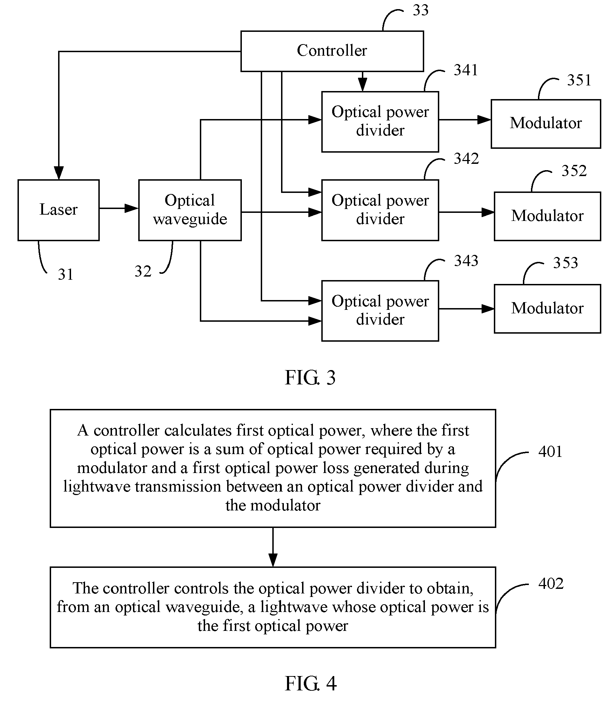

In a specific embodiment, as shown in FIG. 3, an on-chip optical network system includes: a laser 31 served as a light source, an optical waveguide 32 configured to transmit a lightwave, a controller 33, optical power dividers 341, 342, and 343, and modulators 351, 352, and 353, where the optical power dividers and the modulators are in one-to-one correspondence.

The controller 33 separately obtains first optical power losses between the optical power divider 341 and the modulator 351, between the optical power divider 342 and the modulator 352, and between the optical power divider 343 and the modulator 353; invokes optical power required by each of the modulators 351, 352, and 353; then obtains, by means of calculation, first optical power that each of the optical power dividers 341, 342, and 343 needs to obtain from the optical waveguide 32.

The controller 33 further obtains a second optical power loss generated in a process in which the optical waveguide 32 transmits a lightwave from the laser 31 to each of the optical power dividers 341, 342, and 343; then, calculates a sum of the second optical power loss and the first optical power that is required by all the optical power dividers 341, 342, and 343, and uses the sum as second optical power. In a word, the second optical power is a sum of optical power required by all the optical power dividers and all optical power losses generated in a process in which the optical waveguide transmits the lightwave from the light source to the optical power dividers.

After the controller 33 obtains the first optical power of each of the optical power dividers 341, 342, and 343 and the second optical power that the laser 31 needs to output, the controller 33 sends, by using a logic control circuit, an electrical signal to an electrode of each of the optical power dividers 341, 342, and 343, and controls an electric field between electrodes of each of the optical power dividers 341, 342, and 343, so as to control each of the optical power dividers 341, 342, and 343 to obtain, from the optical waveguide 32, a lightwave with the first optical power required by each of the optical power dividers 341, 342, and 343.

In addition, the controller 33 controls, in a manner such as controlling an electric current of the laser 31, the laser 31 to output a lightwave whose optical power is the second optical power.

The on-chip optical network system implements allocation of optical power on demand, so as to reduce cases of excessive optical power obtained by a modulator, and decrease system consumption. In addition, the on-chip optical network system decreases, to a maximum extent, optical power of a lightwave that a light source needs to emit, thereby not only decreasing power consumption of the light source, but also decreasing heat generated by the light source.

The foregoing describes apparatus embodiments of the present invention, and the following describes an optical power control method.

Referring to FIG. 4, FIG. 4 is a flowchart of an optical power control method according to an embodiment of the present invention.

The method is applied to an on-chip optical network system, where the on-chip optical network system includes: a light source, an optical waveguide, a controller, an optical power divider, and a modulator. A lightwave emitted from the light source is transmitted to the optical power divider by using the optical waveguide; the optical power divider obtains a lightwave from the optical waveguide, and transmits the obtained lightwave to the modulator. The on-chip optical network system has a structure the same as that in the foregoing embodiments, and details are not described herein again.

The power control method includes the following steps:
Step 401. The controller calculates first optical power, where the first optical power is a sum of optical power required by the modulator and a first optical power loss generated during lightwave transmission between the optical power divider and the modulator.

The first optical power loss may be set according to an empirical value, or may be obtained by means of detection with the aid of an instrument used to measure a power loss. The optical power required by the modulator may be determined at the beginning of design, and therefore may be built into the controller as logic. For example, in a simple ring topology, in a case in which a transmit node and a receive node are given, optical power required by the transmit node can be calculated at the beginning of chip design of the controller. For another example, in a case in which a two-dimensional mesh topology and a routing decision for a particular clock period are given, and a transmit node and a receive node are given, optical power required by the transmit node may be calculated according to the routing decision. The foregoing transmit node may be a modulator, and the receive node may be a component that receives an optical signal transmitted by the modulator.

After obtaining the first optical power loss, the controller calculates a sum of the optical power required by the modulator and the first optical power loss, uses the sum as the first optical power, and uses the first optical power as optical power of a lightwave that the optical power divider needs to obtain from the optical waveguide.

After obtaining the first optical power by means of calculation, the controller may further calculate a power allocation ratio of the lightwave that the optical power divider needs to obtain. Subsequently, the optical power divider obtains, according to the power allocation ratio, the lightwave whose optical power is the first optical power from the optical waveguide. The power allocation ratio may be a ratio of the first optical power to total power of the lightwave that is transmitted to the optical power divider. The total power of the lightwave that is transmitted to the optical power divider is not total power of the lightwave that is output by the light source. Because an optical power loss is generated during transmission performed by the optical waveguide, the total power of the lightwave that is transmitted to the optical power divider gradually decreases as a transmission distance from the light source to the optical power divider increases. The total power of the lightwave that is transmitted to the optical power divider may be set by using an empirical value, or may be measured by using an instrument used to measure power.

Step 402. The controller controls the optical power divider to obtain a lightwave whose optical power is the first optical power from the optical waveguide.

After obtaining the first optical power or further obtaining the power allocation ratio, the controller sends a control signal to the optical power divider, so as to control the optical power divider to obtain the lightwave whose optical power is the first optical power from the optical waveguide.

Specifically, the controller may emit an electrical signal to an electrode of the optical power divider by using a logic control circuit, and control an electric field between electrodes of the optical power divider, so as to change a refractive index of a material between the two electrodes of the optical power divider, and further control the optical power divider to obtain the lightwave whose optical power is the first optical power from the optical waveguide. The controller may implement multiple control methods, which are not limited to the foregoing control of the electrodes of the optical power divider by using the logic control circuit.

In this embodiment of the present invention, a controller and an optical power divider are added to an on-chip optical network system. The controller controls the optical power divider to obtain a lightwave from an optical waveguide according to an optical power demand of a modulator, which implements allocation of optical power on demand, and changes an existing manner in which a lightwave is obtained according to a fixed optical power ratio. The system implements allocation of optical power on demand; therefore, cases of excessive optical power obtained by the modulator are reduced, and power consumption of the system is decreased.

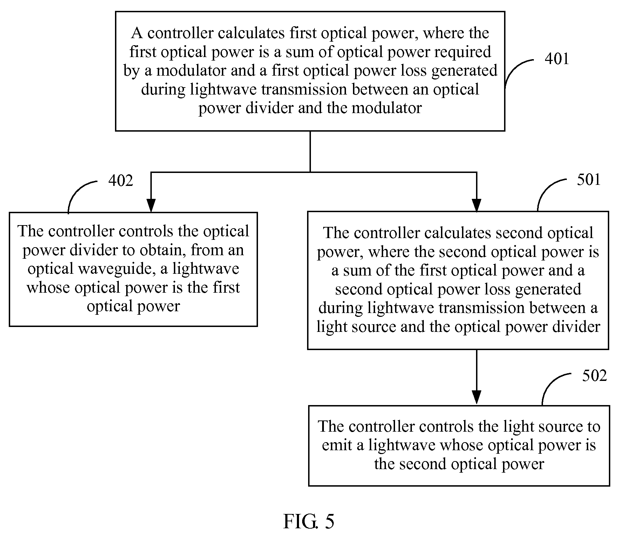

In another embodiment of the present invention, as shown in FIG. 5, after the controller calculates the first optical power, the method further includes the following steps:
Step 501. The controller calculates second optical power, where the second optical power is a sum of the first optical power and a second optical power loss generated during lightwave transmission between the light source and the optical power divider.

The controller first obtains an optical power loss that is generated during transmission of a lightwave by the optical waveguide, and marks the optical power loss as the second optical power loss, where the second optical power loss may be set according to an empirical value, or may be measured by using an instrument used to measure power. After obtaining the second optical power loss, the controller can obtain the second optical power, that is, total power of the lightwave that needs to be emitted from the light source, by calculating a sum of the first optical power and the second optical power loss.

Step 502. The controller controls the light source to emit a lightwave whose optical power is the second optical power.

The controller may implement, in a manner such as controlling an electric current of the light source, control of optical power that is output by the light source, so that the light source emits the lightwave whose optical power is the second optical power.

In this embodiment, total power that is output by a light source is controlled by a controller according to optical power required by components in an on-chip optical network system, which decreases, to a maximum extent, optical power of a lightwave that the light source needs to emit. This not only decreases power consumption of the light source, but also decreases heat generated by the light source.

The on-chip optical network system and the foregoing optical power control method that are in the embodiments of the present invention may be not only applied to a simple ring topology, but also applied to a two-dimensional mesh topology, and details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An on-chip optical network system, comprising: a light source, an optical waveguide, a controller, an optical power divider, and a modulator, wherein: a lightwave emitted from the light source is transmitted to the optical power divider by using the optical waveguide; the optical power divider is configured to obtain a lightwave from the optical waveguide, and transmit the obtained lightwave to the modulator; and the controller is configured to calculate first optical power, and control the optical power divider to obtain a lightwave whose optical power is the first optical power from the optical waveguide, wherein the first optical power is a sum of optical power required by the modulator and a first optical power loss generated during lightwave transmission between the optical power divider and the modulator.

2. The on-chip optical network system according to claim 1, wherein:
the controller is specifically configured to: emit an electrical signal to an electrode of the optical power divider by using a logic control circuit, and control an electric field between electrodes of the optical power divider, so as to control the optical power divider to obtain the lightwave whose optical power is the first optical power from the optical waveguide.

3. The on-chip optical network system according to claim 1 or 2, wherein:
the controller is further configured to: calculate second optical power, and control the light source to emit a lightwave whose optical power is the second optical power, wherein the second optical power is a sum of the first optical power and a second optical power loss generated during lightwave transmission between the light source and the optical power divider.

4. An optical power control method, wherein the method is applied to an on-chip optical network system; the on-chip optical network system comprises a light source, an optical waveguide, a controller, an optical power divider, and a modulator; a lightwave emitted from the light source is transmitted to the optical power divider by using the optical waveguide; the optical power divider obtains a lightwave from the optical waveguide, and transmits the obtained lightwave to the modulator; and the optical power control method comprises:
calculating, by the controller, first optical power, wherein the first optical power is a sum of optical power required by the modulator and a first optical power loss generated during lightwave transmission between the optical power divider and the modulator; and
controlling, by the controller, the optical power divider to obtain a lightwave whose optical power is the first optical power from the optical waveguide.

5. The method according to claim 4, wherein the controlling, by the controller, the optical power divider to obtain a lightwave whose optical power is the first optical power from the optical waveguide comprises:
emitting, by the controller, an electrical signal to an electrode of the optical power divider by using a logic control circuit, and controlling an electric field between electrodes of the optical power divider, so as to control the optical power divider to obtain the lightwave whose optical power is the first optical power from the optical waveguide.

6. The method according to claim 4 or 5, after the calculating, by the controller, first optical power, further comprising:
calculating, by the controller, second optical power, wherein the second optical power is a sum of the first optical power and a second optical power loss generated during lightwave transmission between the light source and the optical power divider; and
controlling, by the controller, the light source to emit a lightwave whose optical power is the second optical power.
